# EUROPEAN PATENT APPLICATION

(11) **EP 4 030 693 A1**
(43) Date of publication of application: **20.07.2022**
(21) Application number: 21152176.0
(22) Date of filing: 18.01.2021
(51) Int. Cl.: H04L 12/24, H04L 12/26

(54) **A METHOD FOR DETERMINING AN INDUSTRIAL EDGE APPLICATION NETWORK METRICS IN A CONTAINER CONFIGURATION TOPOLOGY, A COMPUTER PROGRAM, A COMPUTER-READABLE MEDIUM, DEVICE AND SYSTEM**

(71) Applicant: Siemens Aktiengesellschaft, 80333 München (DE)
(72) Inventor: Albrecht, Harald, 90475 Nürnberg (DE); Upadhyay, Saurabh, 560067 Bangalore Rural, Karnataka (IN)

(57) **Abstract**

The claimed method for determining an Industrial Edge Application Network metric in a container configuration topology meaning that the Industrial Edge Application is executed in at least one Software Container, by executing the following steps:
- collecting metrics data,
- organizing the collected metrics data into Industrial Edge Application-related and Container related metrics data,
- collecting discovery data from a Network Container Discovery. Discovery Data means information about the network topology, such as names of interfaces, the connections of network interfaces to each other and to the outside world, and then the mapping of interfaces to IP stacks to containers, and containers to applications.

The last step is then enhancing the collected metrics data by adding application- and/or topology-related labels using the information received from the discovery data, wherein the label attached act as selector to identify a specific metric of the required type.

## Description

Edge computing is a distributed computing paradigm that brings computation and data storage closer to the location where it is needed, to improve response times and save bandwidth.

Container technology solves problems such as modularization of software and services as self-contained units, so they can be easily transferred and deployed in so-called container hosts. This brings unprecedented software/service modularity and choice from best-of-breed applications into the industrial automation domain.

Application containerization is an virtualization method on Operation System (OS) Level, used to deploy and run distributed applications without launching an entire virtual machine (VM) for each application. Multiple isolated applications or services run on a single host and access the same OS kernel.

Application containerization works with microservices and distributed applications, as each container operates independently of others and uses minimal resources from the host. Each microservice communicates with others through application programming interfaces.

Industrial Edge technology brings both worlds together and IT container technology into industrial automation - the realm of automation technology (AT).

The containerized applications and services deployed on a single Industrial Edge device will typically come from many different third-party sources. There might be no need for a responsible system integrator anymore. In consequence, effective means for gathering and analyzing system metrics for diagnosis become of increasing importance - especially for device operators and application builders without special IT or system knowledge.

In networking, the metric defines a numerical measure of the quality of a connection when using a particular route. The measure can be determined by evaluation or by measurement.

Quality can refer to all factors influencing the choice. Most often, the value refers to the available data transmission rate, the connection quality, or the monetary costs incurred. However, delay, load, Maximum Transmission Unit, reliability and hop count can also be considered.

Regarding cloud services there is also a vast number of metrics, some common metrics are Performance, Cost or Uptime.

However, network infrastructures and networking policies in industrial automation applications differ fundamental from typical "non-industrial" IT data centers and cloud environments. For instance, the machine or cell networks are individually separated from the factory and enterprise networks. Some industrial applications require direct access to the networks on the data-link layer, such as field device management tools.

Edge device operators as well as developers of applications for the Industrial Edge want to gain better insight into the communication performance of their specific deployments in industrial automation environment using network metrics, such as the amounts of data transmitted and received per application.

Users want to be able to quickly meter and qualify communication performance in their distributed automation applications, where the applications are now located in heavily virtualized Industrial Edge systems and the well-known methods do not work.

While the IT domain offers a wide range of existing solutions for gathering and processing network metrics data, these tools either require expert knowledge in virtual container networks or are restricted to typical IT data center use-cases.

In contrast, industrial users want easy access to app-related network metrics which additionally takes into consideration their non-IT-like network configurations, as well as the virtual network topology inside Industrial Edge devices.

Today, there are several known solutions for gathering network metrics, some covering specially configured container environments.

SNMP MIBs (Simple Network Management Protocol, Management Information Base), and in particular the IF-MIB Interfaces Group MIB, RFC 2863, (https://tools.ietf.org/html/rfc2863): This MIB exposes metrics information about network interfaces of a networked (automation) device, such as receive and transmit counters, via the Simple Network Management Protocol SNMP. This means, installing or injecting SNMP agent software into containers of Industrial Edge apps in order to scrape them using an SNMP network interface metrics exporter.

SNMP predates any recent container technology and therefore cannot represent how network interfaces relate to containers and how containers form applications. SNMP can relate network interfaces only to a network host or "device chassis".

Prometheus "node exporter" (https://github.com/prometheus/node_exporter): the node exporter reads network interface metrics data directly from the operating system and then exports it into (de-facto standard) metrics data exchange formats, such as the Prometheus metrics data format for "scraping", meaning that a metrics analysis tool like Prometheus pulls metrics from an exporter for storage, enabling subsequent queries, aggregation of data, and the like.

The node exporter can only export network devices data into the host system, but not those from containers. When Industrial Edge applications get started and stopped, or the system restarted, the names of some of the app-related virtual network elements change, which is another obstacle: metrics data based on unstable network device names is only of very limited use.

Netdata (https://netdata.cloud):
a metrics gathering and monitoring system that gathers a multitude of system metrics, including network metrics. While to some extend already a self-sufficient system, Netdata can also be integrated with other metrics system, especially Prometheus.

Hubble (https://github.com/cilium/hubble):
gathers communication-related metrics from containers and Layer 7 HTTP/HTTPS proxies via Cilium (https://github.com/cilium/cilium) and exports them into the afore mentioned Prometheus (de-facto standard) metrics data exchange format. Cilium supports gathering metrics information only in especially configured container network setups, especially the dedicated "cilium" network in combination with its associated Docker CNM "cilium" driver.

However, many existing metrics gathering solutions currently are limited to network metrics from either only the network interfaces of the container host itself, or additionally from only a container network interface managed by a container engine.

Today, there is neither an application-level awareness nor the virtual network topology for multi-homed hosts and direct (layer 2, Data Link Layer) connected containers taken into consideration.

Preferably, a value-added solution for app-related network metrics should be deployable in a different metrics ecosystem, such as the above mentioned Prometheus, Netdata or Telegraf.

Using only fixed single-network topologies for containers and special exporters could be a possibility. However, this doesn't provide the required direct layer 2 access for some Industrial Edge applications.

It is hence the object of the present invention to provide a solution to the problem outlined above, giving a possibility to gather and analyze system metrics data in the described industrial distributed setup.

The problem is solved by a method according to the features of patent claim 1.

The problem is further solved by a computer program, according to the features of patent claim 5, and by a computer-readable medium according to the features of patent claim 6.

The problem is solved by a device working as a Metrics Application Labeler according to the features of claim 7.
The problem is also solved by a system according to the features of patent claim 11.

The claimed method for determining an Industrial Edge Application Network metric in a container configuration topology meaning that the Industrial Edge Application is executed in at least one Software Container, by executing the following steps:
- collecting metrics data,
- organizing the collected metrics data into Industrial Edge Application-related and Container related metrics data,
- collecting discovery data from a Network Container Discovery. Discovery Data means information about the network topology, such as names of interfaces, the connections of network interfaces to each other and to the outside world, and then the mapping of interfaces to IP stacks to containers, and containers to applications.

The last step is then enhancing the collected metrics data by adding application- and/or topology-related labels using the information received from the discovery data, wherein the label attached act as selector to identify a specific metric of the required type.

Advantageous embodiments of the invention are set out in the subordinate patent claims.

The invention is illustrated in more detail in the Figures, wherein
Figure 1 shows the basic configuration situation of the proposed solution,
Figure 2 a first deployment in a "Standalone" solution Figure 3 an alternative deployment in a so called "Pipeline" solution.

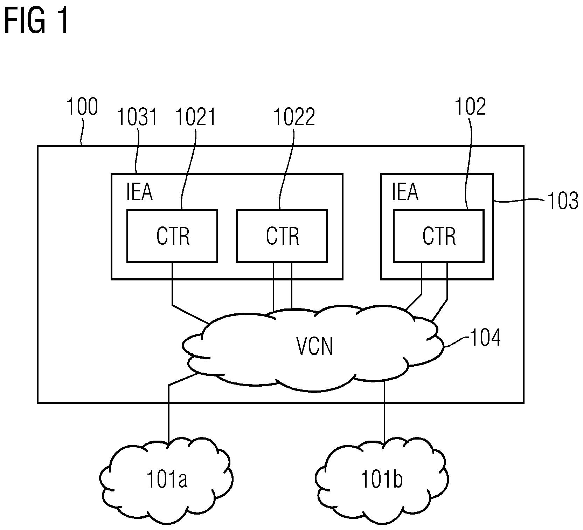

For a better understanding a first, basic configuration is shown in Figure 1, with an Industrial Edge device 100, which is connected to one or multiple networks, such as a factory network 101a and a machine or automation cell network, 101b.

The Industrial Edge device 100 includes several software containers CTR, 102, 1021, 1022, e. g. Linux Docker containers. Some of the containers CTR 102 belong to Industrial Edge application IEA 103. The containers 1021, 1022 of the same Industrial Edge Application 1031, IEA are managed as a single unit when installing, updating, restarting or stopping the Industrial Edge Application IEA. Also, Edge operators most of the time experience this quasi grouping of the application IEA rather than the individual containers CTR an application is made of. Containers CTR are connected within the Industrial Edge device to other containers and to the outside networks via a virtual container network VCN, 104. Some containers CTR may be connected more than once to the VCN, for instance, to directly communicate with automation field devices in a machine/cell network using non-IP automation-specific protocols.

The invention in both variants always consists of a virtual network topology and container discovery module NCD, 110. The module NCD provides information about virtual network elements inside an Industrial Edge device and their relations to each other, such as (virtual) network stacks, virtual bridges, virtual Ethernet peer-to-peer links (Linux VETH), additional virtual Ethernet interfaces on a physical network interface (MACVLAN), et cetera.

In addition, the Network Container Discovery NCD sends information about which container CTR, 102 is related to which virtual network elements, especially the specific (virtual) network stack. The information provided by the Network Container Discovery NCD includes all network
elements not only in containers, but also in the Industrial Edge IE container host itself.

A Network Container Discovery device, 110, NCD collects its discovery information, periodically or on certain events, such as when an Industrial Edge application IEA, 103 or individual containers CTR, 102, 1021, 1022, are started or stopped. In a Linux system for instance, the information is collected from the operating system OS, 111, via "proc" file system, RTNETLINK sockets, and container engine APIs, CE, 112.

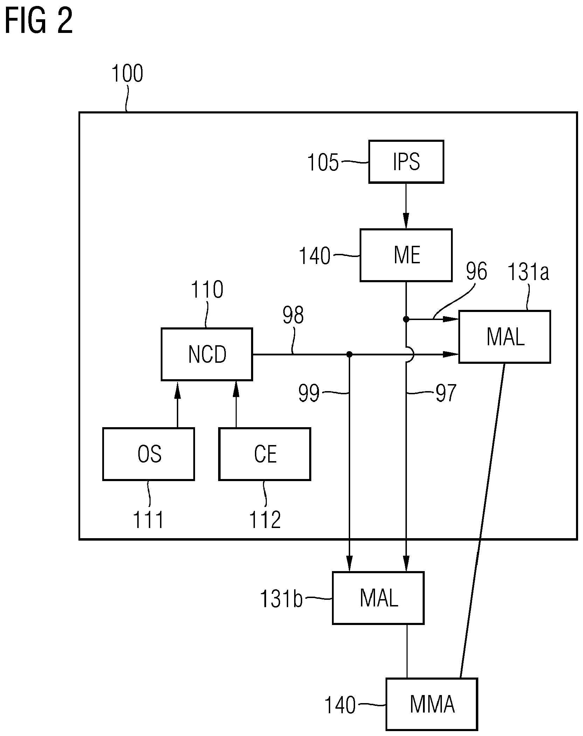

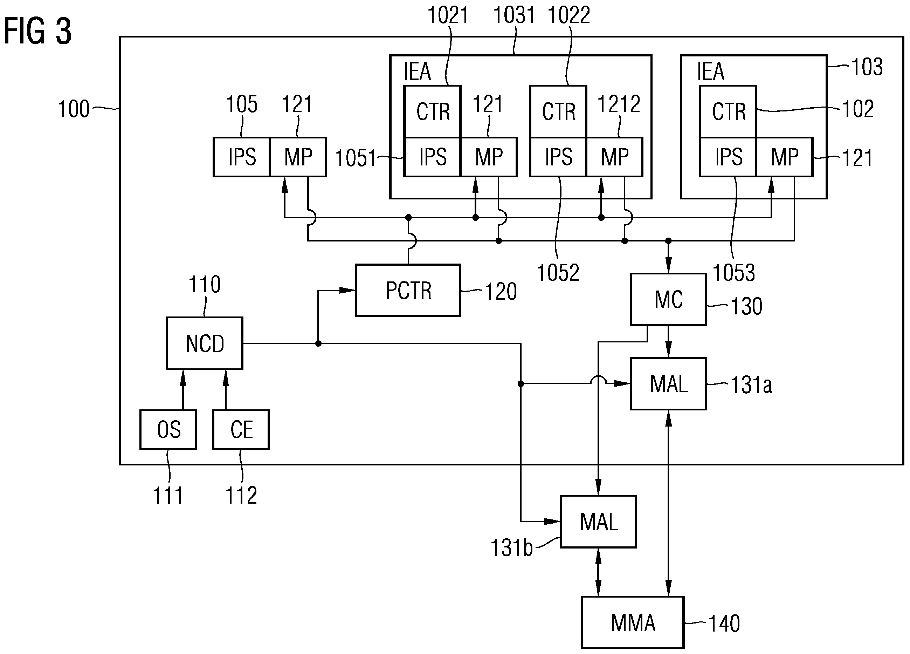

In principle, the proposed method can be deployed in two different configurations, see Figures 2 and 3 for more detailed illustration, the choice of the used configuration depending for example on a customer's preference of metrics toolset.

The so called "Standalone" variant is shown in more detail in Figure 2.

The metrics are supplied by a dedicated network metrics collector which handles an arbitrary number of (container-related) network namespaces, which are automatically discovered.

In this first variant a separate metrics exporter ME, 140 supplies network metrics, which are then enhanced by the Metrics Application Labeler MAL by adding application and topology-related labels, or similar metadata means, depending on metrics ecosystem:
A Metrics Application Labeler MAL, 131a, 131b organizes the required metrics data into Industrial Edge Application (IEA)-related and Container CTR-related metrics data.

The Metrics Application Labeler MAL 131a, 131b then enhances the metrics by adding application- and topology-related labels using the information received from the Network Container Discovery, NCD 110.

In one embodiment for example, the metric labels could start with
- "edge_app_transmit_bytes",
- "edge_app_transmit_packets",
- "edge_app_receive_bytes", etc.
If one queries the metric "edge_app_transmit_bytes" without any other information, it actually produces many metrics, that is, multiple values for the same time t. Therefore, there is need for distinguishing the labels. For example the "edge_app_transmit_bytes" could be distinguished with the marking "ie-app=cloudconnector" (at the bridge) of the app "cloudconnector" from the edge_app_transmit_bytes with "ie-app=machineconnector" at the bridge of the other application.

The Metrics Application Labeler MAL can be deployed within an Industrial Edge device 100 as shown 131a in the figure 2, or in another advantageous embodiment 131b of the invention, can be deployed outside, for instance, in an Industrial Edge Management System, in the cloud.

An alternative "Pipeline" variant is shown in further detail in Figure 3:
In the "Pipeline" configuration, network metrics data is supplied by a device-local metrics exporter, ME, 140, such as the above mentioned Netdata's metrics exporter or Prometheus' "node exporter". This metrics data is then fed into the Metrics Application Labeler MAL, 131a, b, together with the network topology and container information supplied by the Network Container Discovery, NCD 110.

The metrics exporter ME assigns so-called "labels" based on the multi-container application model, as well as based on the network topology, such as app-related virtual bridges and network interface roles. Here, label are key-value pairs assigned to individual metrics.

In the proposed method, the Metrics Application Labeler MAL, 131 organizes metrics data into Industrial Edge Application (IEA)-related and Container CTR-related metrics.

For instance, following general metrics modelling, such as implemented by Prometheus, the name of a metric basically acts as a name-spaced type (or class). Additional labels attached to a metric then act as selectors to identify a specific metric of the required type (=name).

The following is a description of a specific embodiment of the invention. This is intended only as an example, and is not intended to limit the scope of protection of the application.

Industrial Edge Application 103, IEA-related metrics are named by combining the prefix "edge_app_" with suffixes like for example:
∘ ...transmit_bytes, ...transmit_packets, ...
∘ ...receive_bytes, ..._receive_packets, ...

Container 102, CTR-related metrics are named for example by combining the prefix "edge_app_container_" with suffixes...
∘ ...transmit_bytes, ...transmit_packets, ...
∘ ...receive_bytes, ..._receive_packets, ...

The Metrics Application Labeler MAL, 131, labels these metrics using the information received from the Network Container Discovery, NCD 110:
"ie-app=name" is the name of the Industrial Edge Application, IEA (103) as found from either (a specific element of) the name of a container, or - if available - label(s) assigned to a container of the application. The relationship of a network metric to a container is known from the Network Container Discovery, NCD (110) network-container information.

In addition to this simple relationship, the Metric Exporter ME also relates network interfaces to an Industrial Edge Application IEA based on network topology information as follows:
- The Metric Exporter ME 140 starts from a network interface of a container, such as a VETH (Virtual Ethernet) or MACVLAN (virtual Ethernet interfaces on a physical network interface) and locates the network element/interface it is connected to.
- The search is terminated, when the located network interface is not related to any other networking element in the topology.
- Each network element found is labeled with the Industrial Edge Application name.
- If the current network interface is related to another network element, such as bridge port network interfaces to their bridge or MACVLAN network interfaces to a physical network interface, then the Metric Exporter ME processes the related network interface next.
   - "ie-app-uuid=uuid" is a unique identifier of an IEA, 103, also found from container information and related to a network metric using the network-container information, Network Container Discovery NCD 110. In addition to this simple relationship, the Metric Exporter ME also relates network interfaces to an IEA based on network topology information, as described before.
   - "container=ID/name" of Container CTR (102) in case the network metrics belongs to a network interface which is part of a container.
   - "nif=network interface name" is the name of the network interface this metric belongs to.
      Please note that this label usually won't suffice as a filter or lookup criteria on its own as there will be plenty "eth0" in a well-stocked Industrial Edge container system.
   - "nif-type=type" of network interface, such as "macvlan", "veth", et cetera. This information is known from the Container Discovery Module, NCD, information.
   - "direct-access-network=name" of the external network, in case of a direct data-link layer access. The Metric Exporter ME does not find this information in the NCD data, but instead derives it from traversing the network topology information, for each network interface of a container:
      ∘ ...the Metric Exporter ME starts from a network interface of a container, such as a VETH or MACVLAN, and locates the network element/interface it is connected to.
      ∘ The search terminates, when the located network interface is an externally connected network interface in either the host or another network namespace. Externally connected network interfaces are interfaces with hardware drivers, as opposed to virtual networking interface, such as VETH. The value of the label to be attached to the original container interface is the name of the external network interface.
      ∘ If the located network interface is connected to a bridge, then the Metric Exporter ME locates the other network interfaces connected to this bridge and continues tracing from each.
      ∘ The search (tracing) also terminates when reaching (another) container.

Finally, the Metrics Application Labeler MAL (131) exposes the updated metrics - that is, added labels - to metrics monitoring and analysis tools (MMA, 140) for monitoring, alerting, analysis, et cetera. The attached labels allow users to correctly monitor network metrics of their IE apps (103) even across restarts and with respect to additional network access, such as for direct layer-2 field device communication.

In situations where a standard metrics exporter doesn't supply all of the required metrics to be enhanced by adding topology and app-related labels (meta data), this invention defines a further advantageous, enhanced network metrics collector, which above the state of the art automatically discovers and handles arbitrary virtual network stacks and their network statistics.

In this setup, a so-called probe controller, PCTR, 120 evaluates the information provided by the Network Container Discovery NCD, 110, in order to dynamically create or remove metrics probes (MP, 121).
This probe is a piece of software that is able to read out and pass on the corresponding individual values without being part of a container but able to measure the values of the IP stack of a container from outside the container.
In an advantageous embodiment, a process (thread) must switch to the network namespace with the IP stack that the container also uses - but without becoming part of the container.

The metrics probes (MP, 121) gather network traffic metrics from the network interfaces of the (virtual) network stack they are attached to, and then send the metrics data to the metrics collector (MC, 130). On Linux, a means to gather network metrics information from ("inside") a single IP stack is, for example, via "/proc/net/dev". Each MP is responsible for one IP stack (network namespace).

It creates a metrics probe MP for each (virtual and non-virtual) IP network stack (IPS 105; technically a network namespace in Linux) and removes metrics probes MPs after the IP stacks (105) they monitor have been removed, for instance, because a container was stopped and deleted. The probe controller PCTR also "attaches" the metrics probes MP to their respective (virtual) IP stacks (105) using operating system mechanisms, such as in case of Linux "nsenter(1)" or "setns(2)".

The Metric Collector MC 130 passes the collected metrics on to the Metrics Application Labeler MAL, 131a, b, which then acts on the metrics as described for the "Pipeline Variant".

Again, the MAL can be deployed either internally to an Industrial Edge Device 100, or externally, such as in the cloud as part of an Industrial Edge Management System, et cetera.

With the claimed method it is advantageously possible to perform a container traffic metering in virtual networks of arbitrary topologies inside a Docker host, as opposed to state-of-the-art metering of container traffic only in fixed topologies or only of the host itself, but not of containers.

The Network metering of Industrial Edge applications is supported independently of Edge-internal specific virtual network setups. It is a further advantage of the proposed method, that customers don't need to understand any configurations, like MACVLAN dedicated L2 bridge configuration, et cetera, but can focus on her/his app's network metrics instead.

The method further supports metering of multi-homed Industrial Edge applications, such as applications (containers) with an additional direct layer 2 access (for instance, using MACVLAN or directly bridged VETHs).

Another advantage of the claimed method is the possibility of direct integration with existing metering analysis and graphing tools, such as Netdata, Prometheus, and Grafana.

The network metrics (meta) data model represents Industrial Edge applications, that is groups of containers.

It contains all containers and not only some under control of specialized metrics-enabled networking plugins - by using a dedicated container and network topology discovery engine.

The Metrics (meta) data model based upon is automatically derived (that means built) from discovery information about containers, apps, and the virtual network topology.
The solution is independent of container engine-specific network drivers and their specific virtual network topologies.

## Claims

1. Method for determining an Industrial Edge Application Network metric in a container configuration topology meaning that the Industrial Edge Application (IEA) is executed in at least one Software Container (CTR 102, 1021, 1022), by executing the following steps:
- collecting metrics data,
- organizing the collected metrics data into Industrial Edge Application (IEA)-related and Container CTR-related metrics data,
- collecting discovery data from a Network Container Discovery, NCD 110
- enhancing the collected metrics data by adding application- and/or topology-related labels using the information received from the discovery data, wherein
the label attached act as selector to identify a specific metric of the required type.

2. The method according to claim 1, **characterized in that** the discovery data is collected either periodically or on certain predefined events.

3. The method according to claim 1 or 2, **characterized in that**
- Industrial Edge Application-related metrics data is named by using a label combining a first, Industrial-Edge-related, prefix with a used-metrics-related suffix and
- CTR-related metrics are named by using a label combining a second Container-Related prefix with the suffix.

4. The method according one of the preceding claims, **characterized in that**
a network interfaces is related to an Industrial Edge Application IEA based on network topology information by the following steps:
a) starting from a network interface of a container, and
b) locates the network element/interface it is connected to, as long as the located network interface is related to any other networking element in the topology,
c) labeling the network element found with a label created according to the method in one of the preceding claims, and
d) if the current network interface is related to another network element, then continue with step c, else
e) stop.

5. A computer program, **characterized in that**
it comprises instructions for implementing a method according to the steps of one of claims 1 to 4.

6. A computer-readable medium storing instructions that, when executed by a computer, cause it to perform a method according to the steps of one of claims 1 to 4.

7. A Metrics Application Labeler device (MAL, 131) for support of the determination an Industrial Edge Application Network metric in a container configuration topology, wherein the Industrial Edge Application (IEA, 1031) is executed in at least one Software Container (CTR 102, 1021, 1022), with
- a receiver for collected metrics data,
- an organizer for sorting the collected metrics data into Industrial Edge Application (IEA, 1031)-related and Container CTR-related metrics data,
- a receiver for collecting discovery data from a Network Container Discovery, (NCD, 110)
- a labeler that labels these metrics by using the information received from the Network Container Discovery, (NCD, 110) :
enhancing the collected metrics data by adding application- and/or topology-related labels using the information received from the discovery data, wherein
the label attached act as selector to identify a specific metric of the required type.

8. The Metrics Application Labeler device (MAL, 131a) according to claim 7, **characterized in that**
it is deployed within an Industrial Edge device (100).

9. The Metrics Application Labeler (MAL, 131b) according to claim 7, **characterized in that**
It is deployed outside Industrial Edge device (100), in particular in an Industrial Edge Management System or in the cloud.

10. The Metrics Application Labeler device (MAL, 131) according to one of claims 7 to 9, **characterized in that** it uses labels as follows
- Industrial Edge Application-related metrics data is named by using a label combining a first, Industrial-Edge-related, prefix with a used-metrics-related suffix and
- CTR-related metrics are named by using a label combining a second Container-Related prefix with the suffix.

11. System for determining an Industrial Edge Application Network metric in a container configuration topology with the Industrial Edge Application (IEA) is executed in at least one Software Container (CTR 102, 1021, 1022),
with a Metrics Application Labeler device (MAL, 131, 131a, 131b) according to one of claims 7 to 10 and
a metrics exporter device (ME) responsible for assigning the label based on a container application model, and on the network topology.
